(19) **Europäisches Patentamt / European Patent Office / Office européen des brevets**

(11) **EP 3 846 048 A1**

(12) # EUROPEAN PATENT APPLICATION
published in accordance with Art. 153(4) EPC

(43) Date of publication:
**07.07.2021 Bulletin 2021/27**

(21) Application number: **20789812.3**

(22) Date of filing: **29.06.2020**

(51) Int Cl.:
*G06F 16/31* (2019.01)    *G06F 40/205* (2020.01)
*G06F 16/34* (2019.01)

(86) International application number:
**PCT/CN2020/098701**

(87) International publication number:
**WO 2021/088385 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **06.11.2019 CN 201911077285**

(71) Applicants:
- **State Grid Shanghai Municipal Electric Power Company**
  **Shanghai 200122 (CN)**
- **Nanjing University of Aeronautics and Astronautics**
  **Nanjing, Jiangsu 211106 (CN)**

(72) Inventors:
- **SHI, Lingpeng**
  **Shanghai 200072 (CN)**
- **LU, Shida**
  **Shanghai 200072 (CN)**
- **CHEN, Xiaolu**
  **Shanghai 200072 (CN)**
- **CHEN, Yan**
  **Shanghai 200072 (CN)**
- **LU, Zhengjia**
  **Shanghai 200072 (CN)**
- **GU, Zhongjian**
  **Shanghai 200072 (CN)**
- **FU, Yu**
  **Shanghai 200072 (CN)**
- **GU, Rongbin**
  **Shanghai 200072 (CN)**
- **LI, Tianyu**
  **Shanghai 200072 (CN)**
- **LIU, Sai**
  **Nanjing**
  **Jiangsu 210003 (CN)**
- **ZHU, Bei**
  **Nanjing**
  **Jiangsu 211106 (CN)**
- **LI, Jing**
  **Nanjing**
  **Jiangsu 211106 (CN)**
- **LIU, Yunfei**
  **Nanjing**
  **Jiangsu 211106 (CN)**

(74) Representative: **Meyer, Thorsten**
  **Meyer Patentanwaltskanzlei**
  **Pfarrer-Schultes-Weg 14**
  **89077 Ulm (DE)**

(54) **ONLINE LOG ANALYSIS METHOD, SYSTEM, AND ELECTRONIC TERMINAL DEVICE THEREOF**

(57)    The present disclosure provides an online log parsing method, system and electronic terminal device thereof. The method includes the following steps: S1, performing log preprocessing on each unparsed log to obtain a plurality of unparsed log sequences of different log lengths, and classifying each unparsed log sequence into a corresponding first log group; S2, obtaining a log string of each log sequence in the first log group, calculating log string similarities, and performing online clustering based on the log string similarities; and S3, taking the unparsed log as a query item to match templates in template spanning tree of the second log group for common nodes to obtain log templates. The advantages are that the logs are classified according to length, a secondary clustering of logs is performed based on the log string similarity, and log templates are extracted by using template spanning tree. By the method, log templates can be extracted efficiently and accurately from unstructured logs, which is convenient for data analysts to perform more advanced analysis and processing on logs.

EP 3 846 048 A1

Figure 6

**Description**

**FIELD**

The present disclosure relates to the technical field of log parsing, in particular to an online log parsing method based on string clustering and template spanning tree, and system and electronic terminal equipment thereof.

**BACKGROUND**

System logs record the operating information of a system.As important data for online monitoring and anomaly detection of the system, system logs can help administrators debug system failures and perform anomaly analysis, and further ensure the safety of the system. While logs are usually massive and unstructured, by log parsing it is possible to convert a large number of unstructured logs into structured data, that is, to extract templates from the logs. As the first step of system anomaly detection, log parsing improves the efficiency of anomaly detection.

Generally, log parsingmethods can be divided into offline methods and online methods. The offline method is toparse logs offline. The system logs within a time periodneed to be collected and loaded into the memory to train the parsing model, and the logs are then parsed by using the model. Since the offline method is to parse the logs offline instead of in real time, the system administrator may not be able to find abnormal behavior of the system in time. In addition, the offline method requires that the logs are loaded into the memory for training. In case logs of a new type are added after the training, it is necessary to train the parsing model again, which will consume more time and human resources.

Different from the offline method, it is possible to parse the newly generated logs in real time by the online method, and the system administrator can discover and deal with system abnormalities in time. However, the current online log parsing methods may have two shortcomings. One is that there is still room for the existing online methods to improve the accuracy and efficiency. The other is that these online methods are designed for specific log systems, and the parsing parameters of each system are not universal, resulting in low resolution efficiency and poor accuracy.

**SUMMARY**

The object of the present disclosure is to provide an online log parsing method, and system and electronic terminal device thereof. The method performs online parsing based on string clustering and template spanning tree, classifies the logs according to length, calculates log string similarity, perform secondary clustering of logs based on the log string similarity, and extracts log templates by using template spanning tree. By the method, log templates can be extracted efficiently and accurately from unstructured logs, providing system administrators with a simple and intuitive summary as well as clean and standardized structured data, which is convenient for data analysts to perform more advanced analysis and processing on logs.

In order to achieve the above objects, the present disclosure is achieved through the following technical solutions.

An online log parsing method, including the steps of:

S1, performing log preprocessing on each unparsed log to obtain a plurality of unparsed log sequences of different log lengths, and classifying each unparsed log sequence into a corresponding first log group, the first log group being a collection of log sequences of a same log length, and the first log group including parsed log sequences and unparsed log sequences;

S2, obtaining a log string of each log sequence in the first log group, calculating log string similarities between a log string of a first unparsed log sequence in the first log group and the respective log strings of the parsed log sequences in the first log group, and performing online clustering based on the log string similarities to obtain a second log group where the unparsed log sequence is located; and

S3, taking the unparsed log sequence as a query item to match templates in template spanning tree of the second log group for common nodes, obtaining a log template of the unparsed log sequence, and repeating steps S2 and S3 in sequence for subsequent unparsed log sequences to obtain log templates.

Preferably, the step S1 specifically includes:

using a regular expression to identify variable information matching the regular expression in log header of each unparsed log, and deleting the variable information; and

dividing the log content of each unparsed log with a predefined separator to obtain unparsed log sequences of different log lengths, and classifying unparsed log sequences into different first log groups according to different log lengths.

Preferably, the step S2 specifically includes:

S21, obtaining the log string of each log sequence in the first log group, and composing the log strings of all the parsed log sequences in the first log group into a log string set of the first log group;

S22, calculating log string similarities between the log string of the first unparsed log sequence in the first log group and respective log strings in the log string set; and

S23, obtaining a second log group corresponding to the unparsed log sequence based on online clustering of the log string similarities; the second log group being a collection of log sequences with log string similarities reaching a similarity threshold, and a first log group including several second log groups.

Preferably, in step S21, the log string is a string composed of first characters of each of the words in the log sequence.

Preferably, when a first character of a word is a number or an identifier, representing the first character by a wildcard character, and when the first character of a word is a letter, representing the first character by the letter itself.

Preferably, a calculation formula for the log string similarity in step S22 is:

$$sim(S_{m1}, S_{m2}) = \frac{\sum_{i=1}^{len(|S_{m1}|,|S_{m2}|)} \amalg_f(S_{m1}(i), S_{m2}(j))}{len(|S_{m1}|,|S_{m2}|)} \qquad (1),$$

$sim(S_{m1}, S_{m2})$ represents a log string similarity, $S_{m1}$ and $S_{m2}$ represent respectively a log string, $len(|S_{m1}|,|S_{m2}|)$ represents lengths of the two log strings, $S_{m1}(i)$ represents an i-th character of log string $S_{m1}$, and $S_{m2}(j)$ represents a j-th character of log string $S_{m2}$; $\amalg_f(S_{m1}(i), S_{m2}(j))$ is defined as:

$$\amalg_f(x, y) = \begin{cases} 1, & if\, S_{m1}(i) \text{ and } S_{m2}(j) \text{ are equal} \\ 0, & otherwise, \end{cases} \qquad (2).$$

Preferably, the step S23 specifically includes:

setting a similarity threshold; if there is a log string with a log string similarity greater than the similarity threshold, incorporating the unparsed log sequence into the second log group corresponding to the log string; and if there is no log string with a log string similarity greater than the similarity threshold, creating a second log group and updating the log string set of the first log group.

Preferably, the step S3 includes:

inserting in turn each word of the unparsed log sequence into a tree structure, marking a last node of each branch as a special character, starting searching from a root node P of the unparsed log sequence to obtain nodes in which the word to be queried is located; if there is no matching node, inserting the unparsed log sequence into the tree structure as a new branch; if there is a matching node, selecting a corresponding subtree according to the matching node and going to the subtree to continue the search until the search of each word of the unparsed log sequence is completed; obtaining a log template of the unparsed log sequence, and repeating the steps S2 and S3 in sequence for subsequent unparsed log sequences to obtain log templates.

Preferably, determining whether the log template of the unparsed log sequence is successfully obtained in step S3, specifically including: introducing a limit value X; when the limit value X is less than or equal to the threshold λ, it indicates that the template is successfully generated, then updating the template spanning tree and updating the unmatched nodes to the wildcard character '*'; when the limit value X is greater than the threshold λ, inserting the unparsed log sequence into the template spanning tree as a new branch, wherein the limit value X is expressed as:

$$X = \frac{\sum unmatch(t_{mi})}{L - \sigma} \qquad (3).$$

$\sum unmatch(t_{mi})$ represents the number of nodes that failed to match, L is the loglength , and σ is the number of the wildcard characters '*' in the search path.

Preferably, the method further includes:

introducing a maximum tree depth parameter MaxDepth; when a leaf node of the template spanning tree reaches the maximum tree depth parameter MaxDepth, stopping inserting untraversed words of the unparsed log sequence into the template spanning tree, and replacing the untraversed words by a wildcard character.

Preferably, a log parsing system for parsing logs using the online log parsing method, including:

a preprocessing module, configured to preprocess the unparsed log to obtain the unparsed log sequence corresponding to the unparsed log;

a log sequence classifying module, configured to classify the unparsed log sequence to the corresponding first log group according to the length of the unparsed log sequence;

a log string obtaining module, configured to extract the log sequences in the first log group to obtain the log string of each log sequence;

a log string similarity calculation module, configured to calculate log string similarities between the log string of the unparsed log sequence and the respective log strings of the parsed log sequences in the first log group;

an online clustering module, configured to classify the unparsed log sequence into a corresponding second log group according to the log string similarities; and

a template spanning tree matching module, configured to match the unparsed log sequence with the template spanning tree of the second log group to obtain a log template of the unparsed log sequence.

Preferably, the system further includes a determination module configured to determine whether the log template of the unparsed log sequence is successfully obtained.

Preferably, an electronic terminal device includes a processor, a memory, and a computer program that is stored on the memory and can run on the processor; and when the processor executes the program, the online log parsing method is implemented.

Compared with the prior art, the present disclosure has the following advantages.

1. The online log parsing method performs online parsing based on string clustering and template spanning tree, classifies the logs according to length, calculates log string similarity, perform secondary clustering of logs based on the log string similarity, and extracts log templates by using template spanning tree. By the method, log templates can be extracted efficiently and accurately from unstructured logs, providing system administrators with a simple and intuitive summary as well as clean and standardized structured data, which is convenient for data analysts to perform more advanced analysis and processing on logs.

2. In the method of the present disclosure, the concept of log strings is proposed, and the similarity of log strings is calculated. By on online clustering of system logs of the same length based on the similarity of log strings, useless comparison steps during log template extraction are reduced, and the log parsing efficiency is improved.

3. The disclosure adopts a template extraction method based on a template spanning tree, extracts and updates the template by using the template spanning tree, and improves the accuracy of online log parsing.

**BRIEF DESCRIPTION OF THE DRAWINGS**

Figure 1 is an example structure diagram of a log.
Figure 2 is a first log group with a log length being 4 in the embodiment.
Figure 3 is a log template set corresponding to the first log group in Figure 2.
Figure 4 is a log string set corresponding to the first log group in Figure 2.
Figure 5 is a schematic diagram of the log template generation process.
Figure 6 is a schematic diagram of parsingusing the online log parsing method of the present disclosure.

**DETAILED DESCRIPTION**

In conjunction with the accompanying drawings, a preferred specific embodiment is described hereinafter in detail to further illustrate the present disclosure.

Log parsing is an efficient and accurate method for converting unstructured logs into logs with structured forms, which can obtain hidden information from massive system logs to guide subsequent operations.

An online log parsing method is disclosed, including the following steps.

S 1,perform log preprocessing on each unparsed log to obtain a plurality of unparsed log sequences of different log lengths, and classify each unparsed log sequence into a corresponding first log group, the first log group being a collection of log sequences of the same log length, and the first log group including parsed log sequences and unparsed log sequences.

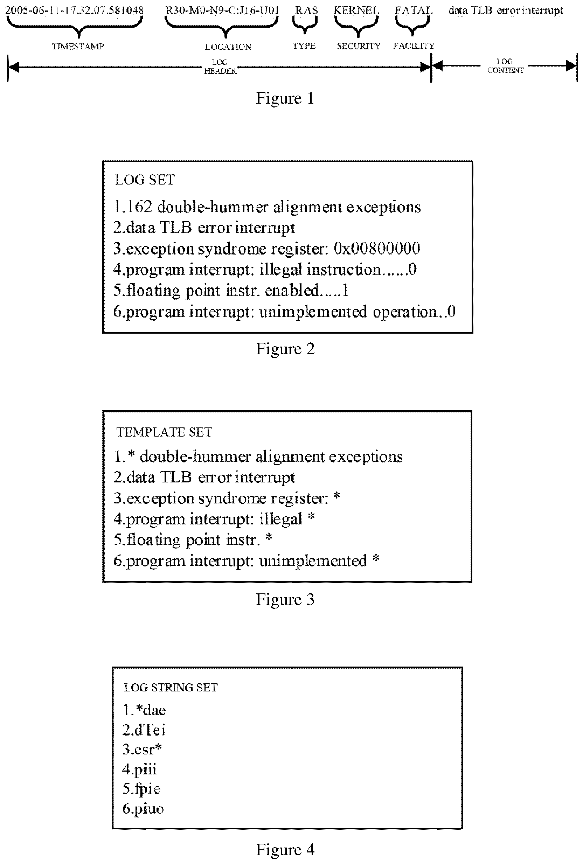

As shown in Figure 1, in the log parsing process, each log m can be expressed as:

$$m = \{m_h, m_c\}$$

$m_h$ represents the log header, and $m_c$ represents the log content. The log header $m_h$ includes trivial variable information such as timestamp, location, log type, security and facility, and log parsing mainly requires to process the part of log content $m_c$. The variable information included in the log header $m_h$ belongs to the type of structured message, and is very intuitive and easy for a system administrator to understand. Thus, it is possible to realize identification and match of the log header just with a regular expression. The process of log parsing is mainly to extract the log template from the log content $m_c$.

The step S1 specifically includes: firstly,use a regular expression to identify the variable information that matches the regular expression in the log header $m_h$ of each unparsed log m,anddelete the variable information. The regular expression herein is very simple, which only needs to match simple tags such as timestamp and IP address instead of the log content $m_c$. Usually, it is possible to identify the log headers $m_h$ of all the unparsed logs m with at most two regular expressions.

Then, the log content $m_c$ of each unparsed log m is divided using a predefined separator to obtain unparsed log sequences of different log lengths. A space separator can generally solve the problem of segmentation of most system logs. The separator divides the log content $m_c$ into an unparsed log sequence $T_m$ of length L (the size of the log sequence is usually called the length of the log sequence):

$$T_m = [t_{m1}, t_{m2}, ..., t_{mL}]$$

$t_{mi}$ is ani-th word in the unparsed log sequence $T_m$; and the length of the log sequence length is L, which means that the unparsed log sequence $T_m$ has a total of L words.

Finally, the unparsed log sequences $T_m$ are classified into different first log groups according to different log lengths, and each first log group contains all log sequences of the same log length. The first log group is represented by $G_L$. In fact, there are logs with different templates in the first log group $G_L$. As shown in Figures 2 and 3, the log data in Figure 2 is partof the log content $m_c$ of the logs (containing 6 unparsed logs) from the supercomputer system (Blue-Gene/L, BGL), and Figure 3 shows a log template set corresponding to Figure 2 (there are different log templates to match different log sequences). The log template set is a collection of log templates for all the log sequences. Figure 2 is a first log group $G_L$ in which the log length of each log sequence is 4, but the template of each log sequence is different. Thus,it may lead to higher complexity if template extraction is performed on the log right after this step.

In order to solve the above problems, a new concept, log string, is introduced. The log string is represented by Sm.Log string Sm is a string composed of the first character of each word in the log sequence. Compared with the log length, the log string Sm is a more representative description of the log.

S2, obtain the log string of each log sequence in the first log group, and calculate log string similarities between the log string of the first unparsed log sequence $T_m$ in the first log group and the respectivelog strings of the parsed log sequences in the first log group; perform online clustering based on the log string similarities to obtain a second log group in which the unparsed log sequence $T_m$ is located; that is, calculate the log string similarities, and perform clustering again to the log sequences in the first log group $G_L$ based on the log string similarities to obtain the second log group represented by $G_s$ with higher template similarity.

Step S2 specifically includes step S21: obtain the log string of each log sequence in the first log group $G_L$, and compose the log strings of all the parsed log sequences in the first log group $G_L$ into a log string set of the first log group $G_L$.

In the step S21, in order to avoid high time complexity of the log string extraction algorithm, the first character of each word in the log sequence in the first log group $G_L$ is extracted as its representative character. A string is composed by the first characters of all the words in the log sequence according to the position of each word in the log sequence, which is called the log string Sm of the log sequence. The collection of log strings Sm of all parsed log sequences in each first log group $G_L$ is called the log string set of the first log group $G_L$, represented by S. That is, each log string Sm is stored as a string type in the log string set S.

To avoid the explosion of the number of string types in the log string set S, if the first character of a word is a number or an identifier, it can be represented by a wildcard character, and if it is a letter, it can be represented by the letter itself. In this embodiment, the wildcard character is *.

For example, as shown in the combination of Figures 2 and 4, Figure 4 is the log string set S corresponding to Figure 2. Although the log sequences in Figure 2 have the same length, they each have a unique log string Sm. The log string Sm of the first log sequence is "*dae", that of the second log sequence is "dTei", followed by "esr*", "piii", "fpie" and " piuo".It can be seen that each log sequence has a different log string Sm, and the log string Smcan describe the log in a more representative way.

S22, calculate log string similaritiesbetween the log string of the first unparsed log sequence $T_m$ in the first log group and the respective log strings in the log string set S.

The calculation formula for the log string similarity is shown in formula (1):

$$sim(S_{m1}, S_{m2}) = \frac{\sum_{i=1}^{len(|S_{m1}|,|S_{m2}|)} \text{II}_f(S_{m1}(i), S_{m2}(j))}{len(|S_{m1}|,|S_{m2}|)} \qquad (1)$$

$sim(S_{m1}, S_{m2})$ represents log string similarity, $S_{m1}$ and $S_{m2}$ represent respectively two log strings that are compared, $len(|S_{m1}|,|S_{m2}|)$ represents the lengths of the two log strings, $S_{m1}(i)$represents ani-th character of the log string $S_{m1}$, and $S_{m2}(j)$represents a j-th character of the log string $S_{m2}$. $\text{II}_f S_{m1}(i), S_{m2}(j))$ is defined as follows:

$$\text{II}_f(S_{m1}(i), S_{m2}(j)) = \begin{cases} 1, & if S_{m1}(i) \text{ and } S_{m2}(j) \text{ are equal} \\ 0, & otherwise, \end{cases} \qquad (2)$$

S23, obtain the second log group $G_s$ corresponding to the unparsed log sequence $T_m$ based on online clustering of the log string similarities; the second log group $G_s$ is a collection of the log sequences of the logs withlog string similarities reaching a similarity threshold, and a first log group $G_L$ contains several second log groups $G_s$.

Step S23 specifically includes: setting a similarity threshold st; if there is a log string with a log string similarity greater than the similarity threshold st, that the log string $S_{m1}$ and the log string $S_{m2}$ are similar (that is, the log string of the unparsed log sequence $T_m$ is similar to the log string being calculated), then the unparsed log sequence $T_m$ is merged into the second log group $G_{s1}$ corresponding to the log string, and each log sequence in the second log group $G_{s1}$ has alog string similarity greater than the similarity threshold st;if there is no log string with the log string similarity greater than the similarity threshold st, create a new second log group $G_{s2}$, and update the log string set S of the first log group $G_L$.

After this step, the number of unprocessed log sequences $T_m$ that do not belong to the second log group $G_{s2}$ in each first log group $G_L$ is reduced, and the probability that the log sequences in each second log group $G_{s2}$ have the same template increases. Performing subsequent template extraction in the second log group $G_s$ having high log similarity can greatly reduce the time complexity of the algorithm.

S3, obtain the template based on the template spanning tree in the second log group $G_s$. That is, the unparsed log sequence $T_m$ is taken as a query item to match the template in the template spanning tree of the second log group $G_s$ for common nodes, so as to obtain the log template of the unparsed log sequence $T_m$ (that is, the log template of the unparsed log). The operations of steps S2 and S3 are repeated in sequence for the subsequent unparsed log sequences to obtain the log templates.

Trie Tree, also known as Prefix Tree or Dictionary Tree, is an ordered tree in which the nodes usually store strings. TrieTree is an algorithm widely used in string searching and prefix matching, etc. Each match is only related to the length of the string being queried, and the time complexity is only O(1). The structure of a standard TrieTree is that all the strings containing a common prefix will be hung under the same node in the TrieTree, concisely storing all the common prefixes in the strings. The template spanning tree of the second log group $G_s$ is constructedbased on the concept of the TrieTree. The unparsed log sequence $T_m$ is taken as the query item to match the template in the template spanning tree for common nodes. The second log group $G_s$ has high log similarities within it, with few template types and low space complexity of the template spanning tree, which effectively improve the efficiency and accuracy of template extraction from the logs.

After the above steps, a piece of log content $m_c$ has been dividedinto log sequences. The log sequences are traversed, and each word therein is inserted into the tree structure in turn.The last node of each branch is marked as a special character. The path from the root node to anyone of the special characters represents a matching path of the piece of log content $m_c$.The tree depth is L+1, and L is the length of the log. In this embodiment, '$' is used as the special character.

Step S3 specifically includes taking the word $t_m$ in the unparsed log sequence $T_m$ as L queries (query items), searching and traversing each path. The search is started from the root node P (empty node) of the unparsed log sequence $T_m$ to obtain the nodes where the word $t_{mi}$ to be queried is in. If there is no matching node (node matching fails), insert the unparsed log sequence $T_m$ into the tree structure asa new branch.If there is a matching node (node matchingsucceeds), select a corresponding subtree according to the node and go to the subtree to continue the search until the search for each word $t_{mi}$ is completed and the log template of the unparsed log sequence $T_m$ is obtained. The

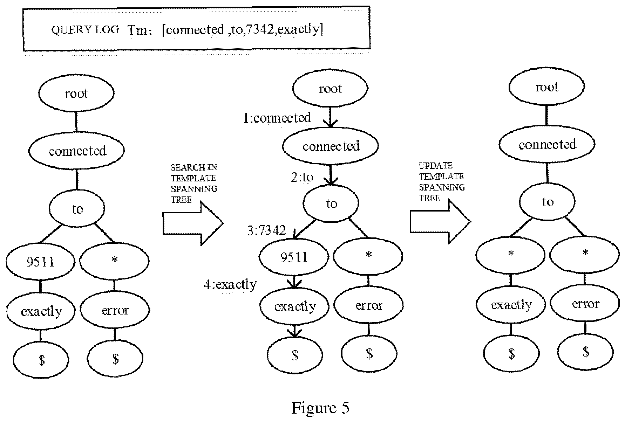

steps S2 and S3 are repeated in sequence for the subsequent unparsed log sequences to obtain the log templates. For example, Figure 5 illustrates the process that the query log$T_m$:[connected ,to,7342,exactly] successfullymatches the template spanning tree to obtain the template and the update of the template spanning tree.

Assuming that the word $t_{mi}$ in the unparsed log sequence $T_m$ is the same as the word $t_m$ stored in the i-th node Q of the template spanning tree, then P=Q and $t_{mi}$ becomes $t_{m (i+1)}$ to continue the search. If $t_{m (i+1)}$ fails to match the i+1th node, the failed node is recorded, the root node P is updated to be the i+2th node, and $t_{m (i+2)}$ continues to match the i+2th node. Log search does not end until L queries are completed. The word $t_m$ stored in the successfully matched nodesis extracted, and the wildcard character '*' is returned for the node that fails to match, so as to obtain the log template.

If there is only one log sequence in the second log group $G_{S2}$ (a second log group separately established for the unparsed log sequence $T_m$), and a template tree is established in the second log group $G_{S2}$ according to the log sequence, then the log template of the second group $G_s$ is the log template of that log sequence. As illustrated in Figure 2, six unparsed log sequences $T_m$ in the first log group $G_L$ in Figure 2 belong to six different second log groups $G_s$. If there is only one unparsed log sequence $T_m$ in each second log group $G_s$, then the log template of each second log group $G_s$ is the log template of that unparsed log sequence $T_m$ in the group.

In addition, the method provided by the present disclosure further includes determining whether the log template is generated successfully in step S3. Specifically, a limit value X is introduced as shown in formula (3).

$$X = \frac{\sum \mathrm{unmatch}(t_{mi})}{L - \sigma} \qquad (3)$$

$\sum$unmatch($t_{mi}$) represents the number of nodes that failed to match, L is the length of the log, and $\sigma$ is the number of the wildcard characters '*' in the search path.

When X is less than or equal to the threshold $\lambda$, it means that the template is successfully generated. The template spanning tree is updated, and the unmatched nodes are updated to the wildcard character '*'. When X is greater than the threshold $\lambda$, the unparsed log sequence $T_m$ is inserted into the template spanning tree as a new branch.

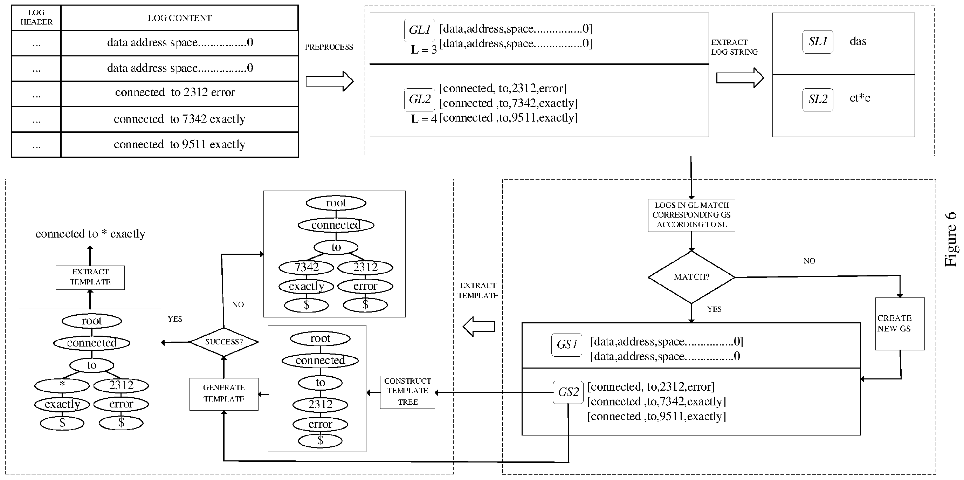

For example, Figure 6 illustrates the process of obtaining log templates by using the online log parsing method of the present disclosure. There are five unparsed log sequences $T_m$ in Figure 6, and for each unparsed log sequence $T_m$, the above algorithm is used to obtain the templates. For example, when processing and parsing the log sequence Tm1[connected,to,2312,error], firstly,classify the log sequence Tm1 into the first log group $G_{L2}$ of alength being 4. When looking for the second log group $G_{S2}$, it is found that there is no log string with a log string similarity greater than the similarity threshold. Then a second log group $G_{S2}$ is created, and the template tree is constructed based on the log sequence Tm1 in the second log group $G_{S2}$. At this time, the log template of the second log group $G_{S2}$ is the template [connected,to,2312,error] of the log sequence Tm1. The above process is repeated for the subsequent log sequences of the log sequence Tm1, and finally templates of a template spanning tree arerecreatedaccording to all the log sequences in the second log group $G_{S2}$. It can be seen from the above that each newly generated unparsed log can be automatically parsed by the online log parsing method, and the templates can be quickly extracted with a relatively high accuracy rate.

In addition, the method also includes introducing the maximum tree depth parameter MaxDepth. When the leaf node of the template spanning tree reaches the maximum tree depth parameter MaxDepth, stop inserting the untraversed words $t_{mi}$ of the unparsed log sequence $T_m$ into the template spanning tree, and the untraversed words $t_{mi}$ are replaced by wildcard characters'*'.

In addition, the present disclosure also includes a log parsing system that uses the online log parsing method to parse logs. The system includes a preprocessing module, a log sequence classifying module, a log string obtaining module, a log string similarity calculation module, an online clustering module and a template spanning tree matching module.

Each module in the log analysis system is specifically as follows.

The preprocessing module is configured to preprocess the unparsed log to obtain the unparsed log sequence corresponding to the unparsed log.

The log sequence classifying module is configured to classify the unparsed log sequence to the corresponding first log group according to the length of the unparsed log sequence.

The log string obtaining module is configured to extract the log sequences in the first log group to obtain the log string of each log sequence.

The log string similarity calculation module is configured to calculate log string similaritiesbetween the log string of the unparsed log sequence and the respective log strings of the parsed log sequences in the first log group.

The online clustering module is configured to classify the unparsed log sequence into a corresponding second log group according to the log string similarities.

The template spanning tree matching module is configured to match the unparsed log sequence with the template spanning tree of the second log group to obtain a log template of the unparsed log sequence.

Preferably, the log parsing system further includes a determination module for determining whether the log template of the unparsed log sequence is successfully obtained in step S3.

The above preprocessing module, log sequence classifying module, log string obtaining module, log string similarity calculation module, online clustering module, template spanning tree matching module and determination module can be independent one or more processors or processing chips, and can share an integrated processor. Memory, related interfaces, and system transmission buses can also be included if necessary. The processor or processing chip executes the program-related code to realize the corresponding function.

In addition, the present disclosure also includes an electronic terminal device. The device includes a processor, a memory, and a computer program that is stored on the memory and can run on the processor; and when the processor executes the program, the online log parsing method described above is implemented.

In summary, the present disclosure provides an online log parsing method, system and electronic terminal device. The method performs online parsing based on string clustering and template spanning tree, classifies the logs according to their lengths, calculates log string similarity, performing secondary clustering of logs based on the log string similarity, and extracts log templates by using template spanning tree. By the method, log templates can be extracted efficiently and accurately from unstructured logs, providing system administrators with a simple and intuitive summary as well as clean and standardized structured data, which is convenient for data analysts to perform more advanced analysis and processing on logs. Moreover, the method does not require analysis of source code or participation of professionals in the field. It is possible to parse each unparsed log automatically and extract templates quickly, and thuslogs can be parsed online efficiently with high accuracy.

Although the content of the present disclosure has been described in detail through the above preferred embodiments, it should be recognized that the above description should not be considered as limiting the present disclosure. After those skilled in the art have read the above content, various modifications and alternatives to the present disclosure will be obvious. Therefore, the protection scope of the present disclosure should be defined by the appended claims.

## Claims

1. An online log parsing method, comprising steps of:

    S1, performing log preprocessing on each unparsed log to obtain a plurality of unparsed log sequences of different log lengths, and classifying each unparsed log sequence into a corresponding first log group, the first log group being a collection of log sequences ofa same log length, and the first log group including parsed log sequences and unparsed log sequences;

    S2, obtaining a log string of each log sequence in the first log group, calculating log string similarities between a log string of a first unparsed log sequence in the first log group and respective log strings of the parsed log sequences in the first log group, and performing online clustering based on the log string similarities toobtain a second log group where the unparsed log sequence is located; and

    S3, taking the unparsed log sequence as a query item to match templates in template spanning tree of the second log group for common nodes, obtaining a log template of the unparsed log sequence, and repeating steps S2 and S3 in sequence for subsequent unparsed log sequences to obtain log templates.

2. The online log parsing method according to claim 1, **characterized in that** the step S1 comprises:

    using a regular expression to identify variable information matching the regular expression in log header of each unparsed log,anddeleting the variable information; and

    dividing the log contentof each unparsed log with a predefined separator to obtain unparsed log sequences of different log lengths, and classifying unparsed log sequences into different first log groups according to different log lengths.

3. The online log parsing method according to claim 1, **characterized in that** the step S2 comprises:

    S21, obtaining the log string of each log sequence in the first log group, and composing the log strings of all the parsed log sequences in the first log group into a log string set of the first log group;

    S22, calculating log string similarities between the log string of the first unparsed log sequence in the first log group and respective log strings in the log string set; and

    S23, obtaining a second log group corresponding to the unparsed log sequence based on online clustering of the log string similarities; the second log group being a collection of log sequences with log string similarities reaching a similarity threshold, and a first log group including several second log groups.

4. The online log parsing method according to claim 3, **characterized in that** in the step S21, the log string is a string composed of first characters of each of the words in the log sequence.

5. The online log parsing method according to claim 4, **characterized in that** when a first character of a word is a number or an identifier, representing the first character by a wildcard character, and when the first character of a word is a letter, representing the first character by the letter itself.

6. The online log parsing method according to claim 3, **characterized in that** a calculation formula for the log string similarity in step S22 is:

$$sim(S_{m1}, S_{m2}) = \frac{\sum_{i=1}^{len(|S_{m1}|,|S_{m2}|)} \mathrm{II}_f(S_{m1}(i),S_{m2}(j))}{len(|S_{m1}|,|S_{m2}|)} \qquad (1),$$

$sim(S_{m1},S_{m2})$ represents a log string similarity, $S_{m1}$ and $S_{m2}$ represent respectively a log string, $len(|S_{m1}|,|S_{m2}|)$ represents lengths of the two log strings, $S_{m1}(i)$ represents an i-th character of log string $S_{m1}$, and $S_{m2}(j)$ represents a j-th character of log string $S_{m2}$; $\mathrm{II}_f(S_{m1}(i), S_{m2}(j))$ is defined as:

$$\mathrm{II}_f(S_{m1}(i), S_{m2}(j)) = \begin{cases} 1, & if \ S_{m1}(i) \ and \ S_{m2}(j) \ are \ equal \\ 0, & otherwise, \end{cases} \qquad (2).$$

7. The online log parsing method according to claim 3, **characterized in that** the step S23 comprises:
setting a similarity threshold; if there is a log string with a log string similarity greater than the similarity threshold, incorporating the unparsed log sequence into the second log group corresponding to the log string; and if there is no log string with a log string similarity greater than the similarity threshold, creating a second log group and updating the log string set of the first log group.

8. The online log parsing method according to claim 3, **characterized in that** the step S3 comprises:
inserting in turn each word of the unparsed log sequence into a tree structure, marking a last node of each branch as a special character, starting searching from a root node P of the unparsed log sequence to obtain nodes in which the word to be queried is located; if there is no matching node, inserting the unparsed log sequence into the tree structure as a new branch; if there is a matching node, selecting a corresponding subtree according to the matching node and going to the subtree to continue the search until the search of each word of the unparsed log sequence is completed; obtaining a log template of the unparsed log sequence, and repeating the steps S2 and S3 in sequence for subsequent unparsed log sequences to obtain log templates.

9. The online log parsing method according to claim 1 or 8, further comprising:
determining whether the log template of the unparsed log sequence is successfully obtained in step S3, specifically including: introducing a limit value X; when the limit value X is less than or equal to the threshold λ, it indicates that the template is successfully generated, then updating the template spanning tree and updating the unmatched nodes to the wildcard character '*'; when the limit value X is greater than the threshold λ, inserting the unparsed log sequence into the template spanning tree as a new branch, wherein the limit value X is expressed as:

$$X = \frac{\sum unmatch(t_{mi})}{L - \sigma} \qquad (3)$$

$\sum unmatch(t_{mi})$ represents a number of nodes that failed to match, L is the log length, and σ is a number of wildcard characters in a search path.

10. The online log parsing method according to claim 1, **characterized in that** the method further comprises:
introducing a maximum tree depth parameter MaxDepth; when a leaf node of the template spanning tree reaches the maximum tree depth parameter MaxDepth, stopping inserting untraversed words of the unparsed log sequence into the template spanning tree, and replacing the untraversed words by a wildcard character.

**11.** A log parsing system for parsing logs using the online log parsing method according to any one of claims 1 to 10, comprising:

a preprocessing module, configured to preprocess anunparsed log to obtain an unparsed log sequence corresponding to the unparsed log;

a log sequence classifying module, configured to classify the unparsed log sequence to the corresponding first log group according to the length of the unparsed log sequence;

a log string obtaining module, configured to extract the log sequences in the first log group to obtain the log string of each log sequence;

a log string similarity calculation module, configured to calculate log string similarities between the log string of the unparsed log sequence and the respective log strings of the parsed log sequences in the first log group;

an online clustering module, configured to classify the unparsed log sequence into a corresponding second log group according to the log string similarities; and

a template spanning tree matching module, configured to match the unparsed log sequence with the template spanning tree of the second log group to obtain a log template of the unparsed log sequence.

**12.** The log parsing system according to claim 11, further comprising:

a determination module, configured to determine whether the log template of the unparsed log sequence is successfully obtained.

**13.** An electronic terminal device, comprising:

a processor, a memory, and a computer program that is stored on the memory and can run on the processor; and when the processor executes the program, the online log parsing method according to any one of claims 1 to 10 is implemented.

2005-06-11-17.32.07.581048     R30-M0-N9-C:J16-U01     RAS     KERNEL     FATAL     data TLB error interrupt

TIMESTAMP                                      LOCATION                    TYPE     SECURITY     FACILITY

|←————————————————— LOG HEADER —————————————————→|←——— LOG CONTENT ———→|

Figure 1

---

LOG SET

1.162 double-hummer alignment exceptions
2.data TLB error interrupt
3.exception syndrome register: 0x00800000
4.program interrupt: illegal instruction......0
5.floating point instr. enabled.....1
6.program interrupt: unimplemented operation..0

Figure 2

---

TEMPLATE SET

1.* double-hummer alignment exceptions
2.data TLB error interrupt
3.exception syndrome register: *
4.program interrupt: illegal *
5.floating point instr. *
6.program interrupt: unimplemented *

Figure 3

---

LOG STRING SET

1.*dae
2.dTei
3.esr*
4.piii
5.fpie
6.piuo

Figure 4

QUERY LOG  Tm：  [connected ,to,7342,exactly]

root

connected

to

9511          *

exactly      error

$          $

SEARCH IN
TEMPLATE
SPANNING
TREE

1:connected

root

connected

2:to

to

3:7342

9511          *

4:exactly

exactly      error

$          $

UPDATE
TEMPLATE
SPANNING
TREE

root

connected

to

*          *

exactly      error

$          $

Figure 5

Figure 6

## INTERNATIONAL SEARCH REPORT

| International application No. |
|---|
| **PCT/CN2020/098701** |

| **A.** | **CLASSIFICATION OF SUBJECT MATTER** |
|---|---|

G06F 16/17(2019.01)i

According to International Patent Classification (IPC) or to both national classification and IPC

| **B.** | **FIELDS SEARCHED** |
|---|---|

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

WPI, EPODOC, CNPAT, CNKI: 日志, 解析, 长度, 相同, 分组, 字符串, 相似度, 聚类, 模板生成树, 在线, log, parse, analysis, length, equal, group, string, similarity, cluster, template generating tree, online

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 110888849 A (STATE GRID SHANGHAI MUNICIPAL ELECTRIC POWER COMPANY et al.) 17 March 2020 (2020-03-17) description, paragraphs [0005]-[0049] | 1-13 |
| A | CN 109144964 A (DBAPPSECURITY LTD.) 04 January 2019 (2019-01-04) description, paragraphs [0071]-[0107] | 1-13 |
| A | CN 109981625 A (PEOPLE'S LIBERATION ARMY ARMY ARTILLERY AIR DEFENSE ACADEMY ZHENGZHOU CAMPUS) 05 July 2019 (2019-07-05) entire document | 1-13 |
| A | CN 110175158 A (HUNAN UNIVERSITY) 27 August 2019 (2019-08-27) entire document | 1-13 |
| A | US 2018091404 A1 (HEWLETT PACKARD ENTERPRISE DEVELOPMENT LP) 29 March 2018 (2018-03-29) entire document | 1-13 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 September 2020** | **10 October 2020** |

| Name and mailing address of the ISA/CN | Authorized officer |
|---|---|
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/098701**

| Patent document cited in search report | | | Publication date (day/month/year) | Patent family member(s) | Publication date (day/month/year) |
|---|---|---|---|---|---|
| CN | 110888849 | A | 17 March 2020 | None | |
| CN | 109144964 | A | 04 January 2019 | None | |
| CN | 109981625 | A | 05 July 2019 | None | |
| CN | 110175158 | A | 27 August 2019 | None | |
| US | 2018091404 | A1 | 29 March 2018 | None | |

Form PCT/ISA/210 (patent family annex) (January 2015)